# EUROPÄISCHE PATENTSCHRIFT

(11) **EP 1 845 010 B1**
(45) Veröffentlichungstag und Bekanntmachung des Hinweises auf die Patenterteilung: **06.07.2011**
(21) Anmeldenummer: 07007415.8
(22) Anmeldetag: 11.04.2007
(51) Int. Cl.: B62D 6/00

(54) **Verfahren zum kennlinien- oder kennfeldabhängigen Variieren des über ein Lenkrad eines aktiven oder semiaktiven Lenksystems oder über ein Pedal eines Kraftfahrzeugs aufzubringenden Lenk- oder Drehmoments**
Method for the characteristic curve- or zone-dependent varying of the steering moment or torque of an active or semi-active steering system actuated via the steering wheel or the pedal of a motor vehicle
Procédé destiné à la variation en fonction d'une courbe caractéristique ou d'une carte de l'accouplement ou de l'angle de guidage fourni par un système de direction actif ou semi actif ou par une pédale de véhicule

(30) Priorität: 15.04.2006 DE 102006017714
(43) Veröffentlichungstag der Anmeldung: 17.10.2007
(73) Patentinhaber: AUDI AG, 85045 Ingolstadt (DE)
(72) Erfinder: Gründinger, Bernhard, 84051 Essenbach (DE); Dick, Wolfgang, 85055 Ingolstadt (DE)
(74) Vertreter: Thielmann, Frank

(56) Entgegenhaltungen:
- EP-A- 1 481 875
- EP-A- 1 498 341
- DE-A1- 10 335 057
- FR-A- 2 853 295

## Beschreibung

Die Erfindung betrifft gemäß dem Oberbegriff des Anspruchs 1 offenbart in EP-A-1 498 341 ein Verfahren zum kennlinien- oder kennfeldabhängigen Variieren des über ein Lenkrad eines aktiven oder semiaktiven Lenksystems oder über ein Pedal eines Kraftfahrzeugs aufzubringenden Lenk- oder Drehmoments, wobei das Kraftfahrzeug ein aktives oder semiaktives Lenksystem oder ein oder mehrere Pedale mit einer über eine Steuerungseinrichtung gesteuerten Einrichtung zur Erzeugung unterschiedlicher über das Lenkrad oder das Pedal aufzubringender Lenk- oder Drehmomente umfasst, wobei die Steuerungseinrichtung die Einrichtung zur Lenk- oder Drehmomenterzeugung in Abhängigkeit wenigstens zweier Kennlinien oder Kennfelder, denen unterschiedliche Lenk- oder Drehmomente zugeordnet sind, steuert, und wobei vom Fahrer manuell oder automatisch eine der Kennlinien oder eines der Kennfelder auswählbar ist.

Moderne Kraftfahrzeuge ermöglichen eine vom Fahrer wählbar dynamische Veränderung des Fahrverhaltens, das heißt, die das Fahrverhalten beeinflussenden Fahrzeugkomponenten wie Fahrwerk, Lenksystem oder Pedalerie werden je nach gewünschtem Fahrverhalten mit entsprechenden Parametern über die zugeordneten Steuergeräte angesteuert. Üblicherweise besteht für den Fahrer die Möglichkeit, zwischen einem ruhigeren, gemäßigten "Komfort"-Verhalten auf ein agileres, aggressiveres "Sport"-Verhalten über einen entsprechenden Wählschalter umzuschalten. Dies führt dazu, dass die jeweils von der Umschaltung betroffenen Steuergeräte entsprechende andere Kennlinien oder das andere Kennfeld zur Steuerung der ihnen zugeordneten Betriebskomponenten abarbeiten.

Im Rahmen einer damit verbundenen Fahrverhaltensänderung wird beispielsweise das Lenksystem des Kraftfahrzeugs beeinflusst. Während bei gewähltem "Komfort"-Verhalten anhand der/des zugeordneten Steuerkennlinie/ Steuerkennfelds das vom Fahrer über das Lenkrad aufzubringende Lenkmoment niedriger ist, so dass das Lenkrad leichtgängiger gedreht werden kann, mithin also die Unterstützung der Lenkbewegung über das Lenksystem relativ groß ist, wird bei Anwählen des "Sport"-Fahrverhaltens über die/das dann zugeordnete und abgearbeitete Kennlinie/Kennfeld ein größeres Lenkmoment erzeugt beziehungsweise ist über das Lenkrad aufzubringen, was einem dynamischeren, direkteren Fahrverhalten entspricht. Dabei unterscheidet man zwischen "aktiven Lenksystemen", in denen sowohl das Verhältnis Lenkradwinkel : Radlenkwinkel als auch das Lenkmoment über das Steuergerät kennlinien- oder kennfeldabhängig beeinflusst wird. Daneben sind "semiaktive Lenksysteme" bekannt, die nur eine Beeinflussung des Lenkmoments ermöglichen, die Übersetzung der Lenkradbewegung auf den Radlenkwinkel ist mechanisch festgelegt.

Innerhalb der semiaktiven Lenksysteme werden hydraulisch basierte und elektromotorisch basierte Systeme unterschieden. In einem hydraulisch basierten semiaktiven Lenksystem wird das Lenkmoment über ein im Bewegungsstrang zwischen Lenkrad und der Radlenkung integriertes elektronisch gesteuertes Proportionalventil erzeugt beziehungsweise kann durch entsprechende Ansteuerung das Lenkmoment variiert werden, wobei über das Proportionalventil der hydraulische Fluss des Fluids beeinflusst wird. In semiaktiven Lenksystemen mit Elektromotor kommt ein solcher zur Lenkunterstützung zum Einsatz, er ist einfach regelbar und lässt einen relativ großen Variationsbereich für das Lenkmoment zu.

Innerhalb der aktiven Lenksysteme werden üblicherweise Systeme mit mechanischer Kopplung zwischen dem Lenkrad und dem Lenkaktuator an der Achse sowie Steer-by-Wire-Lenksysteme ohne mechanische Kopplung zwischen Lenkrad und Lenkaktuator an der Achse unterschieden. Das mechanisch gekoppelte System wird auch als Überlagerungslenksystem bezeichnet, wobei als Überlagerungsgetriebe üblicherweise Planetengetriebe oder Harmonic-Drive-Getriebe unterschieden werden. Überlagerungslenksysteme werden darüber hinaus noch in elektrische Systeme mit einem Elektromotor für die Momentenunterstützung und hydraulische Systeme mit einem elektrisch gesteuerten Proportionalventil differenziert. Bei Steer-by-Wire-Systemen wird die Lenkeingabe des Fahrers über einen Lenkradaktuator erfasst und auf elektrischem oder elektrohydraulischem Weg über einen Achssteller in eine Radbewegung übertragen.

Allen Systemen gemeinsam ist also jeweils eine Einrichtung zur Erzeugung beziehungsweise Variierung des vom Fahrer über das Lenkrad aufzubringenden Lenkmoments, gleich wie diese Einrichtung nun ausgestaltet ist beziehungsweise das System ausgelegt ist. Üblicherweise handelt es sich dabei um ein hydraulisches Proportionalsystem, das elektrisch angesteuert werden kann, oder eben einen Elektromotor, die beide lenkunterstützend wirken. Durch entsprechende Ansteuerung dieser Einrichtungen zur Momentenbeeinflussung kann dann kennlinien- oder kennfeldabhängig ein höheres oder niedrigeres Lenkmoment eingestellt werden.

Mit der Wahl einer bestimmten Fahrdynamik-Kennlinie bzw. eines Fahrdynamik-Kennfelds ist es aber auch möglich, die über die Pedalerie aufzubringenden Drehmomente zu variieren. Während im "Komfort"-Modus das Kupplungs-, Brems- und/oder Gaspedal relativ leichtgängig zu bewegen ist, mithin also ein relativ niedriges Drehmoment realisiert ist, wird im "Sport"-Modus ein höheres Drehmoment angelegt beziehungsweise verlangt, das dem sportlichen Charakter besser entspricht. Auch hier sind entsprechende Einrichtungen je nach Ausgestaltung der Pedalerie vorgesehen, beispielsweise ebenfalls in Form elektrisch gesteuerter Hydraulikventile oder in Form von Elektromotoren.

Üblicherweise wird bei einem Umschalten von der einen auf die andere Kennlinie bzw. bei einer entsprechenden Kennfeld-Umschaltung das Lenk- oder Drehmoment linear von einem Niveau auf das andere Niveau geändert. Diese verschiedenen Lenk- oder Drehmomentniveaus unterscheiden sich jedoch nicht allzu deutlich, so dass für den Fahrer mithin nicht immer intuitiv erkennbar ist, ob nun die Umschaltung von einem in den anderen Modus, insbesondere vom "Komfort"- in den "Sport"-Modus auch tatsächlich erfolgt ist. Mitunter kommt der Fahrer dabei zu dem Schluss, dass eine Fehlfunktion vorliegt, der Kennlinien- oder Kennfeldwahlschalter wird mehrfach betätigt, der Fahrer wird gegebenenfalls kurzzeitig unaufmerksam.

Der Erfindung liegt damit das Problem zugrunde, eine Möglichkeit anzugeben, über die der Fahrer erkennen kann, dass tatsächlich die Modusumschaltung im gewünschten Sinn erfolgt ist.

Zur Lösung dieses Problems ist bei einem Verfahren der eingangs genannten Art erfindungsgemäß vorgesehen, dass für eine vorbestimmte Zeitdauer nach der Auswahl einer der weiteren Steuerung zugrunde zu legenden Kennlinie oder eines Kennfelds ein gegenüber dem der Kennlinie oder dem Kennfeld zugeordneten zu erzeugenden Lenk- oder Drehmoment höheres oder niedrigeres Lenk- oder Drehmoment erzeugt wird, und erst nach Ablauf der Zeitdauer das zugeordnete Lenk- oder Drehmoment erzeugt wird.

Erfindungsgemäß wird bei einer Umschaltung von einer Kennlinie bzw. einem Kennfeld auf die oder das andere das Lenk- oder Drehmoment nicht nur auf den der neuen Kennlinie bzw. dem neuen Kennfeld zugeordneten Wert verändert, sondern definiert überhöht oder unterschritten. Bei einer Umschaltung von "Komfort" auf "Sport" wird also eine definierte Momentenüberhöhung für eine vorbestimmte Zeit, innerhalb welcher das überhöhte Moment wieder auf den kennlinien- oder kennfeldspezifischen Momentenwert abklingt, vorgenommen, bei einer Umschaltung von "Sport" auf "Komfort" ist eine definierte Unterschreitung des Lenk- oder Drehmoment, gefolgt von einem erneuten Anheben auf den der Kennlinie bzw. dem Kennfeld zugeordneten Momentenwert, möglich.

Der Fahrer, der das Lenkrad in der Hand hat und eine Lenkbewegung durchführt, erfährt also haptisch eine deutliche Veränderung der Lenkradbewegung, nachdem er infolge der Momentenüberhöhung, die sofort mit dem Umschalten oder innerhalb einer relativ kurzen Zeitspanne (z.B. in einem Zeitfenster zwischen 100 ms und 2 s nach dem Umschalten) erfolgt, deutlich kräftiger lenken muss, das heißt, die Lenkradbewegung erfolgt deutlich schwergängiger als vorher, als noch die "Komfort"-Kennlinie bzw. das "Komfort"-Kennfeld abgearbeitet wurde. Sie erfolgt aber auch deutlich schwergängiger als bei bloßer Zugrundelegung der "Sport"-Kennlinie bzw. des "Sport"-Kennfelds. Für den Fahrer ist also damit unmittelbar haptisch erkennbar, dass die tatsächliche Dynamikumschaltung auch vorgenommen wurde.

Im umgekehrten Fall, also bei einem Umschalten von "Sport" auf "Komfort", besteht grundsätzlich die Möglichkeit, dem Fahrer den Kennlinien- oder Kennfeldwechsel haptisch ebenfalls erfahrbar zu machen, indem das erzeugte beziehungsweise aufzubringende Drehmoment gegenüber der/dem "Komfort"-Kennlinie/Kennfeld zugeordneten Drehmoment deutlich erniedrigt wird, das heißt, das Lenkrad lässt sich sehr leichtgängig bewegen, was der Fahrer, verglichen mit der deutlich schwergängigeren Lenkradbewegung im "Sport"-Modus, ebenfalls haptisch deutlich spürt.

Die haptische Erfahrbarmachung der Kennlinien- oder Kennfeldumschaltung von "Sport" auf "Komfort" ist jedoch nicht unbedingt erforderlich, da, wenn auch nur temporär, ein zu leichtgängiges Lenkrad vom Fahrer möglicherweise als unangenehm empfunden wird. Deshalb ist es erfindungsgemäß möglich, nur bei einem Umschalten von der Kennlinie oder dem Kennfeld, der oder dem das niedrigere Lenk- oder Drehmoment zugeordnet ist, auf die Kennlinie oder das Kennfeld, der oder dem das höhere Lenk- oder Drehmoment zugeordnet ist, für die vorbestimmte Zeitdauer ein höheres Lenk- oder Drehmoment zu erzeugen, während bei einem Umschalten von der Kennlinie oder dem Kennfeld, der oder dem das höhere Lenk- oder Drehmoment zugeordnet ist, auf die Kennlinie oder das Kennfeld, der oder dem das niedrigere Lenk- oder Drehmoment zugeordnet ist, das Lenk- oder Drehmoment kontinuierlich bis zum Erreichen des niedrigeren Lenk- oder Drehmoment ohne Unterschreitung desselben zu erniedrigen.

Wenngleich vorstehend eine Änderung des Lenkmoments, haptisch erfahrbar über das Lenkrad, beschrieben wurde, besteht gleichermaßen die Möglichkeit, die entsprechende Momentenvariation im erfindungsgemäßen Sinn auch an der Pedalerie vorzunehmen. In diesen Fällen wird, bevorzugt wiederum nur bei einem Umschalten vom "Komfort"-Modus auf "Sport"-Modus, temporär ein höheres Drehmoment angelegt, der Fahrer merkt die relative Schwergängigkeit der Pedalbewegung über den Fuß.

Die haptische Erfahrbarkeit ist, wenn die Momentenumschaltung über die Servounterstützung am Lenkrad beziehungsweise an der Pedalerie im Wesentlichen mit dem Auswählen der neuen Kennlinie bzw. dem neuen Kennfeld zusammenfällt beziehungsweise in einem sehr kleinen Zeitfenster danach erfolgt, letztlich dann erfahrbar, wenn zu diesem Zeitpunkt eine Lenkbewegung bereits erfolgt, innerhalb welcher dann die Momentenerhöhung vorgenommen und erfahren wird, oder wenn innerhalb des Zeitfensters eine solche Lenkbewegung begonnen wird. Denkbar wäre es aber grundsätzlich auch, die erfindungsgemäße Momentenvariation erst dann vorzunehmen, wenn eine Lenkrad- oder Pedalbewegung erfasst wird, was durchaus erst einige Sekunden nach dem Betätigen des Moduswahlschalters erfolgen kann. Zwar fällt dann die mögliche haptische Erfahrbarkeit nicht mehr intuitiv mit der Schalterbetätigung zusammen, gleichwohl ergibt sich für den Fahrer aus der übermäßigen Momentenvariation der Hinweise, dass ein Kennlinien- bzw. Kennfeldwechsel stattgefunden hat.

Um den Momentensprung bei einer Momentenerhöhung möglichst auffällig zu gestalten, sollte die Lenk- oder Drehmomenterhöhung auf das überhöhte maximale Lenk- oder Drehmoment innerhalb sehr kurzer Zeit, bevorzugt innerhalb einer Zeit ≤ 2 s, insbesondere ≤ 1 s erfolgen, wonach das überhöhte Moment wieder auf das der Kennlinie oder dem Kennfeld zugeordnete Moment reduziert wird, was innerhalb einer Zeit zwischen 2 - 10 s, insbesondere zwischen 3 - 5 s erfolgen kann. Erfolgt nur bei einem Umschalten von "Komfort" auf "Sport" eine Momentenüberhöhung, jedoch keine übermäßige Momentenerniedrigung bei einem Umschalten von "Sport" auf "Komfort", sondern wird dort das Drehmoment stetig vom höheren Momentenniveau auf das niedrigere Momentenniveau zurückgenommen, so sollte diese stetige Erniedrigung des Lenk- oder Drehmoments innerhalb einer Zeit von 2 - 10 s, insbesondere von 3 - 5 s erfolgen.

Für den Fall, dass, wie einleitend beschrieben, auch bei einem Wechsel von der/dem "Sport"-Kennlinie/Kennfeld auf die/das "Komfort"-Kennlinie/Kennfeld eine erfindungsgemäße haptische Erfahrbarkeit durch Unterschreiten der der/dem "Komfort"-Kennlinie/Kennfeld zugeordneten Momentenniveaus realisiert werden soll, so sollte die Erniedrigung des aufzubringenden Lenk- oder Drehmoments auf das erniedrigte minimale Lenk- oder Drehmomentniveau innerhalb einer Zeit ≥ 3 s, insbesondere ≥ 5 s erfolgen. Dies deshalb, als mit der Momentenerniedrigung z. B. eine leichtgängigere Lenkradbewegung verbunden ist. Geht die Momentenerniedrigung nun zu schnell vonstatten, kann der Fahrer möglicherweise durch die sehr schnell eintretende deutliche Leichtgängigkeit des Lenkrads überrascht werden. Befindet er sich beispielsweise in einer Kurvenfahrt und bringt er zur Erzeugung des höheren Lenkmoments die entsprechende Kraft zum Einschlagen des Lenkrads auf, so würde er bei einer zu schnellen Momentenreduzierung über die aufgebrachte Lenkkraft das Lenkrad überdrehen, bis er den Überdrehwinkel wieder reduziert. Bei einer entsprechend langsamen Momentenreduzierung kann der Fahrer ohne weiteres die Spur halten, gleichwohl erfährt er durch die deutliche Unterschreitung und das anschließende Anheben des Lenkmoments den gewählten Kennlinien- oder Kennfeldwechsel.

Auch im Falle einer Momentenerniedrigung kann die Zeitdauer desselben zwischen 2 - 10 s, insbesondere zwischen 3 - 5 s betragen. Diese beschriebene Zeitdauer der Momentenerhöhung oder Momenteerniedrigung definiert den Zeitraum, innerhalb welchem das gegenüber dem Kennlinien- oder Kennfeldniveau erhöhte oder erniedrigte Lenk- oder Drehmoment angelegt beziehungsweise aufzubringen ist, also der Zeitraum zwischen dem erstmaligen Über- oder Unterschreiten der zugeordneten Momentenniveaus bis zum erneuten Einlaufen in das Momentenniveau, wenn die Überhöhung oder Unterschreitung abgeklungen ist.

Neben dem Verfahren betrifft die Erfindung ferner ein Kraftfahrzeug, umfassend ein aktives oder semiaktives Lenksystem oder ein oder mehrere Pedale mit einer zugeordneten Einrichtung zum Erzeugen des über ein Lenkrad oder ein Pedal aufzubringenden Lenk- oder Drehmoment sowie eine Steuerungseinrichtung zum kennlinien- oder kennfeldabhängigen Steuern der Einrichtung zur Lenk- oder Drehmomenterzeugung, wobei die Steuerungseinrichtung die Einrichtung zur Lenk- oder Drehmomenterzeugung in Abhängigkeit wenigstens zweier Kennlinien oder Kennfelder, denen unterschiedliche Lenk- oder Drehmomente zugeordnet sind, steuert, und wobei vom Fahrer manuell oder automatisch eine der Kennlinien oder einer der Kennfelder auswählbar ist, wobei das Kraftfahrzeug beziehungsweise die Steuerungseinrichtung zur Durchführung des beschriebenen Verfahrens ausgebildet ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs,
- Fig. 2: ein Prinzipdiagramm zur Darstellung des Momentenverlaufs bei einem Kennlinienwechsel von "Komfort" auf "Sport" mit Momentenüberhöhung, und
- Fig. 3: ein Prinzipdiagramm zur Darstellung des Momentenverlaufs bei einem Kennlinienwechsel von "Sport" auf "Komfort".

Vorauszuschicken ist, dass nachfolgend durchweg von einer Kennlinie als Grundlage für die Steuerung die Rede ist. Die Beschreibung gilt jedoch gleichermaßen im Falle einer wählbaren Kennfeldsteuerung.

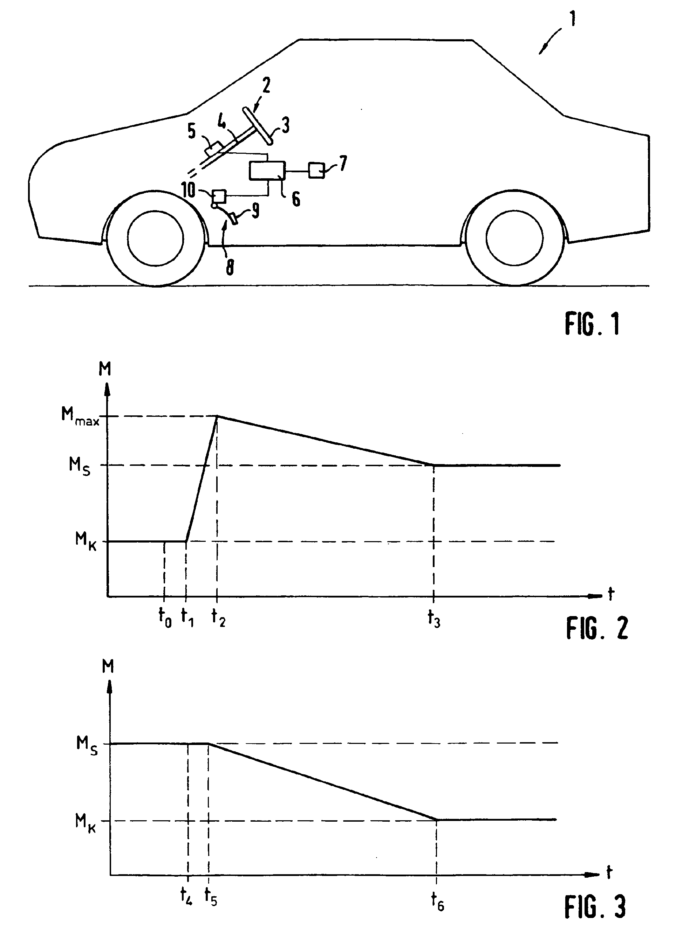

Fig. 1 zeigt ein erfindungsgemäßes Kraftfahrzeug 1, umfassend ein Lenksystem 2, das als aktives oder semiaktives Lenksystem, welche Lenksysteme dem Fachmann hinreichend bekannt sind, ausgeführt sein kann. Ein näheres Eingehen auf die konkrete Ausgestaltung des Lenksystems ist nicht erforderlich, nachdem dem Fachmann die grundsätzlichen Bau- und Funktionsprinzipien und Elemente dieser Lenksysteme geläufig sind. Dargestellt ist deshalb lediglich das Lenkrad 3, das über ein Lenkgestänge 4 in irgendeiner Form mit der Radlenkmechanik gekoppelt ist, wobei bekanntlich bei einem Steer-by-Wire-Lenksysteme auch kein Lenkgestänge 4 vorhanden ist. Fig. 1 ist wie ausgeführt lediglich eine Prinzipdarstellung, die die grundsätzliche Funktionsweise erläutern soll.

Das Lenksystem 2 umfasst ferner eine Einrichtung 5 zur Erzeugung beziehungsweise zur Variierung des über das Lenkrad 3 zum Bewegen der Räder aufzubringenden Lenkmoments. Diese Einrichtung kann beispielsweise in Form eines elektrisch ansteuerbaren hydraulischen Proportionalventils, das Teil der Servounterstützung der Lenkradbetätigung ist, ausgeführt sein. Es kann sich aber auch um einen kleinen Elektromotor handeln, der als Teil eines Überlagerungsgetriebes oder Harmonic-Drives zur Lenkunterstützung vorgesehen ist. Diese Einrichtung 5 wird über eine Steuerungseinrichtung 6 angesteuert, in der wenigstens zwei verschiedene Kennlinien, im nachfolgenden Ausführungsbeispiel eine "Komfort"-Kennlinien und eine "Sport"-Kennlinie abgelegt sind, in Abhängigkeit welcher Kennlinien die Steuerung der Momentenerzeugungseinrichtung 5 erfolgt. Jeder Kennlinie ist ein kennlinienspezifisches Momentenniveau zugeordnet, wobei der "Komfort"-Kennlinie ein niedrigeres Lenkmomentenniveau und der "Sport"-Kennlinie ein höheres Momenteniveau, das zu einer schwergängigeren Lenkbewegung führt, zugeordnet sind. Die jeweilige der Momentensteuerung zugrunde zulegende Kennlinie kann vom Fahrer über einen Moduswahlschalter 7 ausgewählt werden. Der Fahrer kann also selbst einen entsprechenden Fahrdynamikwunsch über diesen Schalter eingeben. In Abhängigkeit der Auswahl wird dann steuergerätseitig die entsprechende Kennlinie eingeladen und abgearbeitet beziehungsweise die Einrichtung 5 entsprechend angesteuert. Über diese Steuerungseinrichtung 6 erfolgt, je nach dem wie das Lenksystem ausgeführt ist, gegebenenfalls auch die Steuerung der Lenkübersetzung oder weiterer Komponenten des Lenksystems, je nach dem wie dieses ausgestaltet ist.

Vorgesehen ist ferner eine Pedalerie 8, wobei hier nur ein Pedal 9 gezeigt ist, das beispielsweise schwenkgelagert ist. Dem Pedal 9 zugeordnet ist ebenfalls eine Einrichtung 10 zur Erzeugung oder Variation eines Drehmoments, das über das Pedal 9 aufgebracht werden muss. Diese Einrichtung 10 wird ebenfalls über die Steuerungseinrichtung 6 in Abhängigkeit der gewählten Kennlinie gesteuert. Das heißt, je nach gewähltem Modus ist auch das Pedal, wie auch das Lenkrad, entweder leichtgängiger, es ist also ein geringeres Drehmoment aufzubringen (im "Komfort"-Modus), oder schwergängiger, es muss ein höheres Drehmoment vom Fahrer zum Bewegen des Pedals aufgebracht werden ("Sport"-Modus).

Um dem Fahrer die Kennlinienumschaltung haptisch erfahrbar zu machen, erfolgt im nachfolgend beschriebenen Ausführungsbeispiel die Erhöhung des Lenk- oder Drehmoments bei einer Umschaltung von dem "Komfort"-Modus in den "Sport"-Modus nicht stetig und linear vom einen Momentenniveau auf das andere, vielmehr wird eine definierte Momentenüberhöhung über die Einrichtung 5 und/oder die Einrichtung 10 erzeugt, die dazu führt, dass der Fahrer für den die Zeitdauer der Überhöhung ein höheres Lenkmoment oder Drehmoment überwinden muss, mithin also das Lenkrad oder das Pedal kurzzeitig deutlich schwergängiger zu bewegen ist, als bei einer Einstellung des der "Sport"-Kennlinie zugeordneten Momentenniveaus.

Fig. 2 zeigt ein grundsätzliches Ablaufdiagramm, wobei längs der Abszisse die Zeit und längs der Ordinate das Drehmoment aufgetragen ist, wobei - nachdem beide Parameter letztlich beliebig gewählt werden können - keine absoluten Werte angegeben sind. Nachfolgend wird das Beispiel der Erhöhung des Lenkmoments beschrieben, die Ausführungen gelten jedoch gleichermaßen bezüglich der Erhöhung des Pedaldrehmoments.

In Fig. 2 ist zum einen das "Komfort"-Lenkmomentenniveau M_{K} und das dem gegenüber höhere "Sport"-Lenkmomentenniveau M_{S} dargestellt. An dieser Stelle sei erwähnt, dass Fig. 2 konstante Momentenniveaus zeigt. Dies ist der Fall, wenn das jeweilige kennlinienspezifische Lenkmoment nicht geschwindigkeitsabhängig variiert wird. Es besteht darüber hinaus aber die Möglichkeit, je nach gefahrener Geschwindigkeit das jeweilige Momentenniveau zu variieren, so dass eine weitere Momentenabhängigkeit gegeben wäre. Am grundsätzlichen Vorgehen ändert sich jedoch auch bei gegebener Geschwindigkeitsabhängigkeit nichts, lediglich im dargestellten Diagramm wäre eine dritte Geschwindigkeitsdimension einzuzeichnen. Im Vorliegenden wird exemplarisch der Fall einer konstanten Geschwindigkeit betrachtet.

Ersichtlich wurde die "Komfort"-Kennlinie gewählt, das über die Einrichtung 5 erzeugte Momentenniveau entspricht dem "Komfort"-Niveau M_{K}. Zum Zeitpunkt t₀ betätigt nun der Fahrer den Kennlinienwahlschalter 7 und wählt die "Sport"-Kennlinie an. Mit sehr kurzer Verzögerung, vorzugsweise innerhalb eines Zeitintervalls von 100 ms - 2 s, wird zum Zeitpunkt t₁ über die Steuerungseinrichtung 6 die Einrichtung 5 derart angesteuert, dass mit sehr steiler Flanke das erzeugte und aufzubringende Ist-Moment auf einen maximalen Lenkmomentenwert Mₘₐₓ, der deutlich oberhalb des "Sport"-Momentenniveaus M_{S} liegt, erhöht wird. Der maximale Momentenwert wird zum Zeitpunkt t₂ erreicht, wobei das Zeitintervall zwischen t₁ und t₂ ≤ 2 s, insbesondere ≤ 1 s sein sollte, so dass der Fahrer, der beispielsweise gerade eine Kurve befährt oder eine sonstige Lenkbewegung vornimmt, den erfolgenden Momentenanstieg haptisch sehr schnell und eindeutig über das Lenkrad spürt. Anschließend wird das über die Einrichtung 5 erzeugte Lenkmoment vom maximalen Wert Mₘₐₓ innerhalb des Zeitintervalls t₂ - t₃ auf das der Kennlinie zugeordnete Momentenniveau M_{S} reduziert. Das Zeitfenster zwischen t₂ und t₃ kann zwischen 2 - 10 s, insbesondere zwischen 3 - 5 s betragen. Nach Einlaufen auf das Momentenniveau M_{S} im Zeitpunkt t₃ bleibt dieses Momentenniveau beibehalten.

An dieser Stelle ist darauf hinzuweisen, dass die Zeitpunkte t₀ und t₁ auch zusammenfallen können, das heißt, es ist keine zeitliche Verzögerung gegeben, vielmehr erfolgt die Momentenerhöhung unmittelbar mit Betätigen des Kennlinienwahlschalters 7. Denkbar ist es aber auch, keine definierte Zeitspanne zwischen t₀ und t₁ zu realisieren, sondern diesen Zeitabschnitt dahingehend dynamisch auszulegen, dass bei einer Kennlinienauswahl im Zeitpunkt t₀ die Momentenanhebung über die Einrichtung 5 erst dann erfolgt, wenn eine Lenkradbewegung aus der Lenkradstellung, wie sie im Zeitpunkt t₀ gegeben ist, sensiert wird. Fährt das Fahrzeug gerade aus, muss der Fahrer zwangsläufig keine Kraft aufbringen, um ein Lenkmoment zu überwinden. Die Momentenerhöhung und -überhöhung kann von ihm folglich nicht registriert werden. Um ihm dennoch haptisch die Information des Kennlinienwechsels geben zu können, kann bei dynamischem Zeitfenster die Momentenanhebung erst dann erfolgen, wenn der Fahrer das Lenkrad um ein vorgegebenes Winkelinkrement bewegt, so dass er dann während dieser oder der fortgesetzten Lenkradbewegung haptisch die Lenkmomentanhebung und - überhöhung erfährt. Diese Vorgehensweise kann nicht nur bei Geradeausfahrten, also bei in der 0-Stellung befindlichem Lenkrad erfolgen, sondern auch bei einer Kurvenfahrt, wenn das Lenkrad bereits verdreht ist. Die Momentenüberhöhung kann auch in diesem Fall erst dann erfolgen, wenn das Lenkrad wieder bewegt wird, wobei die Momenten- anhebung auch in Abhängigkeit der Richtung der Lenkradbewegung erfolgen kann, das heißt, die Erhöhung wird angestoßen, wenn das Lenkrad in eine vorab definierte Richtung, beispielsweise für einen weiteren Lenkeinschlag bewegt wird, während sie bei einer Lenkradbewegung in eine andere Richtung noch unterbleibt.

Fig. 3 zeigt ebenfalls ein Zeit-Momenten-Diagramm, das quasi die Fortsetzung des Diagramms gemäß Fig. 2 zeigt. Dargestellt sind auch hier die beiden Momentenniveaus M_{K} und M_{S}, wobei über die Einrichtung 5 zunächst das hohe "Sport"-Niveau M_{S} angesteuert ist, angenommenermaßen kommend aus dem Diagramm gemäß Fig. 2. Im Zeitpunkt t₄ wählt nun der Fahrer den erneuten Wechsel von der "Sport"-Kennlinie auf die "Komfort"-Kennlinie über den Kennlinienwahlschalter 7. Mit kurzer Verzögerung von auch hier beispielsweise 100 ms - 2 s erfolgt zum Zeitpunkt t₅ durch Steuerung der Einrichtung 5 über die Steuerungseinrichtung 6 die Reduzierung des Ist-Moments auf das "Komfort"-Momentenniveau M_{K}, das zum Zeitpunkt t₆ erreicht wird. Das Zeitfenster zwischen t₅ und t₆ beträgt beispielsweise 2 - 5 s, das heißt, die Momentenreduzierung - verglichen mit der extrem abrupten Momentenanhebung gemäß Fig. 2 zwischen t₁ und t₂ - ist deutlich langsamer und langdauernder. Eine Momentenerniedrigung findet hier nicht statt, das "Komfort"-Momentenniveau M_{K} bleibt beibehalten. Gleichwohl wäre es auch hier denkbar, das "Komfort"-Momenteniveau M_{K} zu unterschreiten und anschließend das Moment wieder auf das "Komfort"-Momentenniveau M_{K} anzuheben, um so eine temporäre deutlichere Leichtgängigkeit der Lenkbewegung als haptische Information für den Kennlinienwechsel zu realisieren.

Ein zweckmäßiges Zeitschema zur Momentenanhebung und zur Momentenreduzierung kann beispielsweise der Gestalt sein:
t₁ - t₂: 0,5 s
t₂ - t₃: 3,5 s
t₅ - t₆: 3 s.

Je nach Ausgestaltung des Lenksystems erfolgt die Momentenüberhöhung durch entsprechende Ansteuerung der Einrichtung 5. Handelt es sich bei der Einrichtung 5 beispielsweise um ein hydraulisches Proportionalventil, das zum Variieren des Lenkmoments in seiner Bestromung geändert wird, so wird zur Erzeugung der Momentenüberhöhung der Ventilstrom I_{Ventil} je nach Verschaltung des Ventilstroms um ein gewisses Δ I_{Ventil} erhöht oder erniedrigt. In entsprechender Weise wird auch bei Verwendung eines Elektromotors zur Momentenvariation die Bestromung desselben entsprechend der geforderten Momentenüberhöhung variiert. Die Differenz zwischen dem "Komfort"-Momentenniveau und dem "Sport"-Momentenniveau sollte wenigstens 1 Nm, bevorzugt größer sein, damit beide Niveaus gut auseinander gehalten werden können und mithin sich für den Fahrer ein deutlicher Unterschied ergibt. Die Momentenüberhöhung sollte beispielsweise um wenigstens 0,5 Nm über das "Sport"-Momentenniveau folgen, kann aber je nach gegebenem Unterschied zwischen "Komfort"- und "Sport"-Momentenniveau auch größer sein.

## Patentansprüche

1. Verfahren zum kennlinien- oder kennfeldabhängigen Variieren des über ein Lenkrad eines aktiven oder semiaktiven Lenksystems oder über ein Pedal eines Kraftfahrzeugs aufzubringenden Lenk- oder Drehmoments, wobei das Kraftfahrzeug ein aktives oder semiaktives Lenksystem oder ein oder mehrere Pedale mit einer über eine Steuerungseinrichtung gesteuerten Einrichtung zur Erzeugung unterschiedlicher über das Lenkrad oder das Pedal aufzubringender Lenk- oder Drehmomente umfasst, wobei die Steuerungseinrichtung die Einrichtung zur Lenk- oder Drehmomenterzeugung in Abhängigkeit wenigstens zweier Kennlinien oder Kennfelder, denen unterschiedliche Lenk- oder Drehmomente zugeordnet sind, steuert, und wobei vom Fahrer manuell oder automatisch eine der Kennlinien oder eines der Kennfelder auswählbar ist,
**dadurch gekennzeichnet,**
**dass** für eine vorbestimmte Zeitdauer nach der Auswahl einer der weiteren Steuerung zugrunde zu legenden Kennlinie oder eines Kennfelds ein gegenüber dem der Kennlinie oder dem Kennfeld zugeordneten zu erzeugenden Lenk- oder Drehmoment höheres oder niedrigeres Lenk- oder Drehmoment erzeugt wird, und erst nach Ablauf der Zeitdauer das ausgewählte zugeordnete Lenk- oder Drehmoment erzeugt wird.

2. Verfahren nach Anspruch 1,
**dadurch gekennzeichnet,**
**dass** nur bei einem Umschalten von der Kennlinie oder dem Kennfeld, der oder dem das niedrigere Lenk- oder Drehmoment zugeordnet ist, auf die Kennlinie oder das Kennfeld, der oder dem das höhere Lenk- oder Drehmoment zugeordnet ist, für die vorbestimmte Zeitdauer ein höheres Lenk- oder Drehmoment erzeugt wird, während bei einem Umschalten von der Kennlinie oder dem Kennfeld, der oder dem das höhere Lenk- oder Drehmoment zugeordnet ist, auf die Kennlinie oder das Kennfeld, der oder dem das niedrigere Lenk- oder Drehmoment zugeordnet ist, das Lenk- oder Drehmoment kontinuierlich bis zum Erreichen des niedrigeren Lenk- oder Drehmoments ohne Unterschreitung desselben erniedrigt wird.

3. Verfahren nach Anspruch 1 oder 2,
**dadurch gekennzeichnet,**
**dass** die Erhöhung des aufzubringenden Lenk- oder Drehmoments auf des überhöhte maximale Lenk- oder Drehmoment innerhalb einer Zeit ≤ 2 s, insbesondere ≤ 1 s erfolgt.

4. Verfahren nach Anspruch 2 oder 2 und 3,
**dadurch gekennzeichnet,**
**dass** die Erniedrigung des Lenk- oder Drehmoments innerhalb einer Zeit von 2 - 10 s, insbesondere von 3 - 5 s erfolgt.

5. Verfahren nach Anspruch 1,
**dadurch gekennzeichnet,**
**dass** die Erniedrigung des aufzubringenden Lenk- oder Drehmoments auf das erniedrigte minimale Lenk- oder Drehmoment innerhalb einer Zeit ≥ 3 s, insbesondere ≥ 5 s erfolgt.

6. Verfahren nach einem der vorangehenden Ansprüche,
**dadurch gekennzeichnet,**
**dass** die Zeitdauer der Momentenüberhöhung oder Momentenerniedrigung zwischen 2 - 10 s, insbesondere zwischen 3 - 5 s beträgt.

7. Verfahren nach einem der vorangehenden Ansprüche,
**dadurch gekennzeichnet**,
die Erzeugung des höheren oder niedrigeren Lenk- oder Drehmoments erst bei Erfassung einer Lenk- oder Pedalbewegung erfolgt.

8. Kraftfahrzeug, umfassend ein aktives oder semiaktives Lenksystem oder ein oder mehrere Pedale mit einer zugeordneten Einrichtung zum Erzeugen des über ein Lenkrad oder ein Pedal aufzubringenden Lenk- oder Drehmoments sowie eine Steuerungseinrichtung zum kennlinien- oder kennfeldabhängigen Steuern der Einrichtung zur Lenk- oder Drehmomenterzeugung, wobei die Steuerungseinrichtung die Einrichtung zur Lenk- oder Drehmomenterzeugung in Abhängigkeit wenigstens zweier Kennlinien oder Kennfelder, denen unterschiedliche Lenk- oder Drehmomente zugeordnet sind, steuert, und wobei vom Fahrer manuell oder automatisch eine der Kennlinien oder eines der Kennfelder auswählbar ist, welches das Verfahren nach einem der Ansprüche 1 bis 7 durchführt.

## Claims

1. Method for varying under the governance of a characteristic curve or map, the steering moment or torque to be applied via a steering wheel of an active or semi-active steering system, or via a pedal, of a motor vehicle, where the motor vehicle comprises an active or semi-active steering system or one or more pedals with a device controlled by a control device for generating different steering moments or torques to be applied via the steering wheel or pedal, where the control device controls the device for generating steering moment or torque under the governance of at least two characteristic curves or maps to which different steering moments or torques are assigned, and where one of the characteristic curves or maps can be manually or automatically selected by the driver,
**characterized in that**
for a predetermined time period following selection of a characteristic curve or map for imposition on subsequent control, a steering moment or torque that is higher or lower than the steering moment or torque to be generated which is assigned to the characteristic curve or map, and the selected assigned steering moment or torque is not generated until after the expiry of said time period.

2. Method according to Claim 1,
**characterized in that**
only on switching from the characteristic curve or map to which the lower steering moment or torque is assigned, to the characteristic curve or map to which the higher steering moment or torque is assigned, is a higher steering moment or torque generated for the predetermined time period, whereas on switching from the characteristic curve or map to which the higher steering moment or torque is assigned, to the characteristic curve or map to which the lower steering moment or torque is assigned, the steering moment or torque is lowered continuously until the lower steering moment or torque is reached without undershooting.

3. Method according to Claim 1 or Claim 2,
**characterized in that**
the raising to the stepped-up maximum of the steering moment or torque to be applied is effected within a time of not more than 2 s, and in particular not more than 1 s.

4. Method according to Claim 2 or Claims 2 and 3,
**characterized in that**
the lowering of the steering moment or torque is effected within a time of 2 to 10 s, and in particular 3 to 5 s.

5. Method according to Claim 1,
**characterized in that**
the lowering to the reduced minimum of the steering moment or torque to be applied is effected within a time of not less than 3 s, and in particular not less than 5 s.

6. Method according to any one of the preceding claims,
**characterized in that**
the duration of the period of stepping-up or reduction in moment or torque is between 2 and 10 s, and in particular between 3 and 5 s.

7. Method according to any one of the preceding claims,
**characterized in that**
generation of the higher or lower steering moment or torque is effected only on detection of an actuation of the steering [wheel] or pedal.

8. Motor vehicle comprising an active or semi-active steering system or one or more pedals with an assigned device for generating the steering moment or torque to be applied via a steering wheel or pedal and a control device for controlling the device for generating steering moment or torque under the governance of a characteristic curve or map, where the control device controls the device for generating steering moment or torque under the governance of at least two characteristic curves or maps to which different steering moments or torques are assigned, and where one of the characteristic curves or maps can be manually or automatically selected by the driver, which performs the method according to any one of Claims 1 to 7.

## Revendications

1. Procédé destiné à faire varier en fonction d'une courbe caractéristique ou d'un champ caractéristique le couple de rotation ou de direction à fournir par un volant d'un système de direction actif ou semi-actif ou par une pédale de véhicule, dans lequel le véhicule comprend un système de direction actif ou semi-actif ou une ou plusieurs pédales avec un dispositif, commandé par le biais d'un dispositif de commande, de génération de différents couples de rotation ou de direction à fournir par le volant ou la pédale, dans lequel le dispositif de commande commande le dispositif de génération de couple de rotation ou de direction en fonction d'au moins deux courbes caractéristiques ou champs caractéristiques, auxquels différents couples de rotation ou de direction sont affectés et dans lequel une des courbes caractéristiques ou un des champs caractéristiques peut être sélectionné(e) automatiquement ou manuellement par le conducteur,
**caractérisé en ce que**
un couple de rotation ou de direction supérieur ou inférieur au couple de rotation ou de direction à générer affecté à la courbe caractéristique ou au champ caractéristique est généré pendant une durée prédéterminée après la sélection d'une courbe caractéristique ou d'un champ caractéristique à poser à la base de la suite de la commande et le couple de rotation ou de direction affecté sélectionné n'est généré qu'après écoulement de la durée.

2. Procédé selon la revendication 1,
**caractérisé en ce que**
seul lors d'une commutation de la courbe caractéristique ou du champ caractéristique, à laquelle ou auquel le couple de rotation ou de direction inférieur est affecté, à la courbe caractéristique ou au champ caractéristique, à laquelle ou auquel le couple de rotation ou de direction supérieur est affecté, un couple de rotation ou de direction supérieur est généré pendant une durée prédéterminée alors que lors d'une commutation de la courbe caractéristique ou du champ caractéristique, à laquelle ou auquel le couple de rotation ou de direction supérieur est affecté, à la courbe caractéristique ou au champ caractéristique, à laquelle ou auquel le couple de rotation ou de direction inférieur est affecté, le couple de rotation ou de direction est réduit en continu jusqu'à ce que le couple de rotation ou de direction inférieur soit atteint sans être en-dessous.

3. Procédé selon la revendication 1 ou 2,
**caractérisé en ce que**
l'augmentation du couple de rotation ou de direction à fournir, au couple de rotation ou de direction maximum sur-augmenté se fait en l'espace d'une durée ≤ 2 s, en particulier ≤ 1 s.

4. Procédé selon la revendication 1 ou 2 et 3,
**caractérisé en ce que**
la réduction du couple de rotation ou de direction se fait en l'espace d'une durée de 2 à 10 s, en particulier de 3 à 5 s.

5. Procédé selon la revendication 1,
**caractérisé en ce que**
la réduction du couple de rotation ou de direction à fournir, au couple de rotation ou de direction minimum réduit se fait en l'espace d'une durée ≥ 3 s, en particulier ≥ 5 s.

6. Procédé selon l'une quelconque des revendications précédentes,
**caractérisé en ce que**
la durée de la sur-augmentation de couple ou de la réduction de couple est comprise entre 2 - 10 s, en particulier entre 3 - 5 s.

7. Procédé selon l'une quelconque des revendications précédentes,
**caractérisé en ce que**
la génération du couple de rotation ou de direction supérieur ou inférieur n'a lieu que lors de la détection d'un mouvement de volant ou de pédale.

8. Véhicule comprenant un système de direction actif ou semi-actif ou une ou plusieurs pédales avec un dispositif affecté de génération du couple de rotation ou de direction à fournir par un volant ou une pédale ainsi qu'un dispositif de commande pour la commande en fonction d'une courbe caractéristique ou d'un champ caractéristique du dispositif de génération de couple de rotation ou de direction, dans lequel le dispositif de commande commande le dispositif de génération de couple de rotation ou de direction en fonction d'au moins deux courbes caractéristiques ou champs caractéristiques, auxquel(le)s différents couples de rotation ou de direction sont affectés et dans lequel une des courbes caractéristiques ou un des champs caractéristiques peut être sélectionné(e) automatiquement ou manuellement par le conducteur, laquelle ou lequel réalise le procédé selon l'une quelconque des revendications 1 à 7.
